**Europäisches Patentamt**

**European Patent Office**

**Office européen des brevets**

(11) Veröffentlichungsnummer: **0 202 600**
**A2**

## (12) EUROPÄISCHE PATENTANMELDUNG

(21) Anmeldenummer: **86106575.3**

(22) Anmeldetag: **14.05.86**

(51) Int. Cl.4: **B01D 53/14 , C10K 1/14**

(30) Priorität: **22.05.85 DE 3518368**

(43) Veröffentlichungstag der Anmeldung:
**26.11.86 Patentblatt 86/48**

(84) Benannte Vertragsstaaten:
**AT BE DE FR GB IT NL**

(71) Anmelder: **BASF Aktiengesellschaft**
**Carl-Bosch-Strasse 38**
**D-6700 Ludwigshafen(DE)**

(72) Erfinder: **Wagner, Eckhart, Dr.**
**Birkenstrasse 21 a**
**D-6701 Maxdorf(DE)**
Erfinder: **Hefner, Werner, Dr.**
**In der Teichgewann 20**
**D-6840 Lampertheim(DE)**
Erfinder: **Wagner, Ulrich, Dr.**
**Knospstrasse 7**
**D-6703 Limburgerhof(DE)**
Erfinder: **Schubert, Franz**
**Gartenstrasse 3**
**D-6149 Fuerth(DE)**

(54) **Verfahren zum Entfernen von CO2 und/oder H2S aus Gasen.**

(57) Die vorliegende Erfindung betrifft ein Verfahren zum Entfernen von $CO_2$ und/oder $H_2S$ aus $CO_2$ und/oder $H_2S$ enthaltenden Gasen mittels einer wäßrigen, ein Alkanolamin enthaltenden Absorptionsflüssigkeit, bei dem man die $CO_2$ und/oder $H_2S$ enthaltenden Gase in einer Absorptionsstufe bei Temperaturen von 40 bis 100°C mit einer 20 bis 70 Gew.-% Methyldiethanolamin enthaltenden wäßrigen Absorptionsflüssigkeit behandelt, am Kopf der Absorptionsstufe die behandelten Gase abzieht, am Sumpf der Absorptionsstufe die mit $CO_2$ und/oder $H_2S$ beladene wäßrige Absorptionsflüssigkeit abzieht und zur Regenerierung in mindestens zwei Entspannungsstufen entspannt und dabei die letzte Entspannungsstufe bei vermindertem Druck gegenüber Atmosphärendruck betreibt, wobei der verminderte Druck in der letzten Entspannungsstufe mittels eines mechanischen Vakuumerzeugungsapparates und eines Wasserdampfstrahlers, die hintereinandergeschaltet sind, erzeugt wird, und die regenerierte Absorptionsflüssigkeit in die Absorptionsstufe zurückgeführt.

EP 0 202 600 A2

## Verfahren zum Entfernen von $CO_2$ und/oder $H_2S$ aus Gasen

Die vorliegende Erfindung betrifft ein Verfahren zum Entfernen von $CO_2$ und/oder $H_2S$ aus Gasen mittels einer wäßrigen Absorptionsflüssigkeit.

Es ist bekannt, z.B. aus A.L. Kohl -F.C. Riesenfeld, Gas Purification, 3. Auflage, 1979, wäßrige Lösungen von Monoethanolamin oder Diethanolamin oder Mischungen von Cyclotetramethylensulfon und einer wäßrigen Lösung von Diisopropanolamin als Lösungsmittel zur Entfernung von $CO_2$ und/oder $H_2S$ aus Gasen zu verwenden. Bei diesen Verfahren ist es erforderlich, das mit $CO_2$ und gegebenenfalls $H_2S$ beladene Lösungsmittel in einer Ausstreifkolonne durch Zufuhr von Dampf zu regenerieren, was mit erheblichem Energieaufwand verbunden ist. Bei der Entfernung von $CO_2$ und gegebenenfalls $H_2S$ aus höhere Kohlenwasserstoffe enthaltenden Erdgasen mittels einer Mischung aus Cyclotetramethylensulfon und einer wäßrigen Lösung von Diisopropanolamin kommt als zusätzlicher Nachteil hinzu, daß die höheren Kohlenwasserstoffe in diesem Lösungsmittel eine relativ hohe Löslichkeit aufweisen, so daß das am Kopf der Ausstreifkolonne abgezogene Sauergas einen relativ hohen Gehalt an Kohlenwasserstoffen aufweist, der, falls das Sauergas $H_2S$ enthält, zu Schwierigkeiten in einer nachgeschalteten Claus-Anlage führen kann. Primäre oder sekundäre Alkanolamine, wie Monoethanolamin oder Diethanolamin, können außerdem in der Regel nur als wäßrige Lösungen mit verhältnismäßig geringer Konzentration an diesen Alkanolaminen verwendet werden, da bei Verwendung höherer Konzentrationen schwere Korrosionsschäden an Anlageteilen auftreten können.

Es bestand daher Bedarf nach einem Verfahren zum Entfernen von $CO_2$ und/oder $H_2S$ aus Gasen, bei dem die Nachteile der bekannten Verfahren vermieden werden können.

Es wurde nun ein vorteilhaftes Verfahren gefunden zum Entfernen von $CO_2$ und/oder $H_2S$ aus $CO_2$ und/oder $H_2S$ enthaltenden Gasen mittels einer wäßrigen, ein Alkanolamin enthaltenden Absorptionsflüssigkeit, welches dadurch gekennzeichnet ist, daß man die $CO_2$ und/oder $H_2S$ enthaltenden Gase in einer Absorptionsstufe bei Temperaturen von 40 bis 100°C mit einer 20 bis 70 Gew.-% Methyldiethanolamin enthaltenden wäßrigen Absorptionsflüssigkeit behandelt, am Kopf der Absorptionsstufe die behandelten Gase abzieht, am Sumpf der Absorptionsstufe die mit $CO_2$ und/oder $H_2S$ beladene wäßrige Absorptionsflüssigkeit abzieht und zur Regenerierung in mindestens zwei Entspannungsstufen entspannt und dabei die letzte Entspannunsstufe bei vermindertem Druck gegenüber Atmosphärendruck betreibt, wobei der verminderte Druck in der letzten Entspannungsstufe mittels eines mechanischen Vakuumerzeugungsapparates und eines Wasserdampfstrahlers, die hintereinandergeschaltet sind, erzeugt wird, und die regenerierte Absorptionsflüssigkeit in die Absorptionsstufe zurückführt.

In einer vorteilhaften Ausführungsform des Verfahrens führt man zum Ausgleich der Wasserverluste durch in dem am Kopf der Absorptionsstufe und den Entspannungsstufen abgezogenen Gasströmen enthaltenes Wasser am Sumpf der vorletzten Entspannungsstufe eine dem Wasserverlust entsprechende Menge Wasserdampf zu.

Nach dem neuen Verfahren wird das mit $CO_2$ und/oder $H_2S$ beladene Lösungsmittel ohne Verwendung einer Ausstreifkolonne allein durch Entspannung regeneriert, so daß eine erhebliche Reduktion sowohl der Investitionskosten als auch der Energieverbrauchskosten erreicht wird. Weiter können bei dem neuen Verfahren relativ hohe Methyldiethanolaminkonzentrationen in der Absorptionsflüssigkeit verwendet werden, ohne daß es zu Korrosionsschäden in der Gaswaschanlage kommt. Ein weiterer Vorteil des Verfahrens besteht darin, daß der Wasserhaushalt der Gaswaschanlage in einfacher Weise geregelt werden kann. Neben der Regelung des Wasserhaushaltes der Gaswaschanlage kann durch diese Arbeitsweise gleichzeitig der Wärmehaushalt der Gaswaschanlage geregelt werden, so daß ein für die Regelung des Wärmehaushaltes in der Gaswaschanlage vorhandener Wärmetauscher kleiner ausgeführt werden oder gegebenenfalls ganz wegfallen kann. Durch die erfindungsgemäße Arbeitsweise wird eine regenerierte Absorptionsflüssigkeit mit einem geringen $CO_2$-und/oder $H_2S$-Gehalt erhalten, so daß es möglich ist, geringere Mengen an Absorptionsflüssigkeit im Kreis zu führen, wodurch sich entsprechende Einsparungen bei den Energieverbräuchen ergeben.

In einer weiteren bevorzugten Ausführungsform des Verfahrens wird der Wasserdampfstrahler hinter den mechanischen Vakuumerzeugungsapparat geschaltet. Dabei kann es vorteilhaft sein, daß man das am Kopf der letzten Entspannungsstufe abgezogene Gas zusammen mit dem Wasserdampf, mit dem der Wasserdampfstrahler betrieben wird, am Sumpf der vorletzten Entspannungsstufe zuführt.

Als nach dem erfindungsgemäßen Verfahren zu behandelnde Gase kommen beispielsweise Kohlevergasungsgase, Synthesegase, Koksofengase und vorzugsweise Erdgase in Betracht. Vorteilhaft wird das Verfahren zum Entfernen von $CO_2$

und/oder $H_2S$ aus Erdgasen verwendet, die neben Methan noch höhere Kohlenwasserstoffe enthalten. Bei diesen höheren Kohlenwasserstoffen handelt es sich im allgemeinen um $C_2$-bis $C_{30}$-Kohlenwasserstoffe, insbesondere $C_2$-bis $C_{12}$-Kohlenwasserstoffe, die in der Regel aliphatisch sind, z.B. Ethan, Propan, Isobutan, n-Butan, Isopentan, n-Pentan, die Hexane, Heptane, Octane, Nonane, Decane und die höheren Homologen. Die höheren Kohlenwasserstoffe können neben den aliphatischen Kohlenwasserstoffen auch noch aromatische Kohlenwasserstoffe wie Benzol enthalten. Im allgemeinen beträgt der Gehalt der Erdgase an den höheren Kohlenwasserstoffen 0,1 bis 40 Mol.-%, vorzugsweise 0,5 bis 30 Mol.-%, insbesondere 1 bis 20 Mol.-%.

Die Gase weisen im allgemeinen einen $CO_2$-Gehalt von 1 bis 90 Mol.-%, vorzugsweise 2 bis 90 Mol.-%, insbesondere 5 bis 60 Mol.-% auf. Neben dem $CO_2$ können die Gase als weiteres Sauergas $H_2S$ enthalten oder sie können $H_2S$ allein enthalten, z.B. in Mengen von wenigen Mol.-ppm, beispielsweise 1 Mol.-pm bis 50 Mol.-%, vorzugsweise 10 Mol.-ppm bis 40 Mol.-%.

Als Lösungsmittel wird für das erfindungsgemäße Verfahren eine 20 bis 70 Gew.-%, vorzugsweise 30 bis 65 Gew.-%, insbesondere 40 bis 60 Gew.-% Methyldiethanolamin enthaltende wäßrige Absorptionsflüssigkeit verwendet. Zweckmäßig wird eine wäßrige Methyldiethanolaminlösung eingesetzt, z.B. eine wäßrige Lösung von Methyldiethanolamin technischer Reinheit. In einer vorteilhaften Ausführungsform des Verfahrens verwendet man eine wäßrige Methyldiethanolaminlösung, die zusätzlich 0,05 bis 1 Mol/l, insbesondere 0,1 bis 0,8 Mol/l, insbesondere 0,1 bis 0,6 Mol/l eines primären Amins oder Alkanolamins wie Monoethanolamin oder vorzugsweise eines sekundären Amins oder Alkanolamins, vorteilhaft Methylmonoethanolamin, ganz besonders vorteilhaft Piperazin, enthält.

Die 20 bis 70 Gew.-% Methyldiethanolamin enthaltende wäßrige Absorptionsflüssigkeit kann zusätzlich noch ein physikalisches Lösungsmittel enthalten. Geeignete physikalische Lösungsmittel sind beispielsweise N-Methylpyrrolidon, Tetramethylensulfon, Methanol, Oligoethylenglykoldialkylether, wie Oligoethylenglykolmethylisopropylether (SEPASOLV MPE), Oligoethylenglykoldimethylether (SELEXOL). Das physikalische Lösungsmittel ist in der Absorptionsflüssigkeit im allgemeinen in Mengen von 1 bis 60 Gew.-%, vorzugsweise 10 bis 50 Gew.-%, insbesondere 20 bis 40 Gew.-%, enthalten.

Das erfindungsgemäße Verfahren wird in der Weise durchgeführt, daß das $CO_2$ und/oder $H_2S$ enthaltende Gas zunächst in einer Absorptionsstufe mit der Methyldiethanolamin enthaltenden Absorptionsflüssigkeit behandelt wird. Dabei werden in der Absorptiosstufe Temperaturen von 40 bis 100°C, vorzugsweise 50 bis 90°C, insbesondere 60 bis 80°C für die Absorptionsflüssigkeit aufrechterhalten. Im allgemeinen werden in der Absorptionsstufe Drucke von 10 bis 110 bar angewendet. Als Absorptionsstufe wird zweckmäßig eine Absorptionskolonne verwendet, im allgemeinen eine Füllkörperkolonne oder eine mit Böden ausgestattete Kolonne. Zweckmäßig wird das zu behandelnde Gas am Sumpf und die Absorptionsflüssigkeit am Kopf der Absorptionskolonne zugeführt, wobei die sauren Gase $CO_2$ und/oder $H_2S$ im Gegenstrom ausgewaschen werden. Während gegebenenfalls vorhandenes $H_2S$ zweckmäßig weitgehend, im allgemeinen auf $H_2S$-Gehalte im behandelten Gas von höchstens 120 Mol.-ppm, vorzugsweise höchstens 10 Mol.-ppm, insbesondere höchstens 3 Mol.-ppm ausgewaschen wird, kann es vorteilhaft sein, das $CO_2$ im Gas soweit auszuwaschen, daß die $CO_2$-Gehalte im behandelten Gas höchstens etwa 0,5 bis 6, vorzugsweise 0,5 bis 5, inbesondere 1 bis 4 Mol.-% betragen. Das behandelte Gas wird zweckmäßig am Kopf der Absorptionsstufe, zweckmäßig an einem Punkt, der oberhalb der Zuführung der Absorptionsflüssigkeit liegt, abgezogen. Die mit den Sauergasen $CO_2$ und/oder $H_2S$ beladene Absorptionsflüssigkeit wird zweckmäßig am Sumpf der Absorptionszone abgezogen.

Anschließend wird die beladene Absorptionsflüssigkeit in mindestens 2, zweckmäßig 2 bis 5, vorzugsweise 2 bis 3, Entspannungsstufen regeneriert, wobei die letzte Entspannungsstufe bei vermindertem Druck gegenüber Atmosphärendruck betrieben wird und der verminderte Druck mittels eines mechanischen Vakuumerzeugungsapparates und eines Wasserdampfstrahlers, die hintereinandergeschaltet sind, erzeugt wird, und gegebenenfalls gleichzeitig zum Ausgleich der Wasserverluste durch in den am Kopf der Absorptiosstufe und den Entspannungsstufen abgezogenen Gasströmen enthaltenes Wasser am Sumpf der vorletzten Entspannungsstufe eine dem Wasserverlust entsprechende Menge Wasserdampf zugeführt wird. Vorzugsweise wird dabei in der letzten Entspannungsstufe ein Druck von etwa 0,3 bis etwa 1 bar, vorzugsweise 0,4 bis etwa 1 bar, insbesondere 0,5 bis etwa 0,9 bar, aufrechterhalten. Als mechanische Vakuumerzeugungsapparate kommen beispielsweise Vakuumpumpen und vorzugsweise Verdichter, z.B. Schraubenverdichter, Zentrifugalverdichter in Betracht. Vorzugsweise ist der Wasserdampfstrahler hinter den mechanischen Vakuumerzeugungsapparat geschaltet Im allgemeinen werden in den Entspannungsstufen Temperaturen von 35 bis 100°C, vorzugsweise 45 bis 90°C insbesondere 55 bis 85°C angewendet.

Zum Ausgleich der Wasserverluste, die bei dem Verfahren durch in den am Kopf der Absorptionsstufe und den Entspannungsstufen abgezogenen Gasströmen enthaltenes Wasser entstehen, wird zweckmäßig am Sumpf der vorletzten Entspannungsstufe eine dem Wasserverlust entsprechende Menge Wasserdampf zugeführt. In der Regel wird das in den abgezogenen Gasströmen enthaltene Wasser im wesentlichen als Wasserdampf abgezogen. Dem Sumpf der vorletzten Entspannungsstufe kann Niederdruck-, Mitteldruck- oder Hochdruckdampf, d.h. z.B. 1,5-bis 100-bar-Dampf zugeführt werden. Vorzugsweise verwendet man Dampf im niederen Druckbereich, z.B. 1,5-bis 10-bar-Dampf, vorteilhaft 1,5-bis 5-bar-Dampf, da dieser Niederdruckdampf im allgemeinen wohlfeil zur Verfügung steht.

Das am Kopf der letzten Entspannungsstufe abgezogene Gas kann an die Atmosphäre abgegeben werden oder, falls es noch $H_2S$ enthält, durch Oxidation des $H_2S$, z.B. in einer Claus-Anlage, aufgearbeitet werden. In einer vorteilhaften Ausführungsform wird das Verfahren in der Weise betrieben, daß der Wasserdampfstrahler hinter den mechanischen Vakuumerzeugungsapparat geschaltet ist und dabei zweckmäßig das am Kopf der letzten Entspannungsstufe abgezogene Gas zusammen mit dem Wasserdampf, mit dem der Wasserdampfstrahler betrieben wird, am Sumpf der vorletzten Entspannungsstufe zugeführt wird.

Falls der Wasserdampf zum Betrieb des Wasserdampfstrahlers am Sumpf der vorletzten Entspannungsstufe zugeführt wird, wird der Wasserdampfstrah-ler zweckmäßig mit einer solchen Menge Wasserdampf betrieben, wie sie zum Ausgleich der Wasserverluste des Verfahrens erforderlich ist. Es ist jedoch auch möglich, den Wasserdampfstrahler mit einer geringeren als zum Ausgleich der Wasserverluste entsprechenden Wasserdampfmenge zu betreiben und am Sumpf der vorletzten Entspannungsstufe zusätzlich die zum Ausgleich der Wasserverluste noch fehlende Wasserdampfmenge zuzuführen. Zum Betrieb des Wasserdampfstrahlers kann Mitteldruck-oder Hochdruckdampf verwendet werden. Vorzugsweise verwendet man Dampf im mittlerem Druckbereich, z.B. 5-bis 20-bar-Dampf, vorzugsweise 5-bis 10-bar-Dampf.

Die vorletzte Entspannungsstufe wird zweckmäßig bei einem Druck von etwa 1 bis 30 bar, vorzugsweise etwa 1 bis 25 bar, insbesondere etwa 1 bis 20 bar betrieben.

Für die Entspannung werden zweckmäßig Entspannungsbehälter, die z.B. auch als Kolonne gestaltet sein können, verwendet. Diese Entspannungsbehälter können frei von besonderen Einbauten sein. Es können jedoch auch mit Einbauten, z.B. mit Füllkörpern ausgestattete Kolonnen verwendet werden.

Die Sauergase $CO_2$ und/oder $H_2S$ werden zweckmäßig am Kopf der letzten Entspannungsstufe bzw., falls das am Kopf der letzten Entspannungsstufe abgezogene Gas zusammen mit dem Wasserdampf für den Betrieb des Wasserdampfstrahlers am Sumpf der vorletzten Entspannungsstufe zugeführt wird, am Kopf der vorletzten Entspannungsstufe abgezogen. Die am Sumpf der letzten Entspannungsstzufe abgezogene regenerierte Absorptionsflüssigkeit wird in die Absorptionsstdufe zurückgeführt.

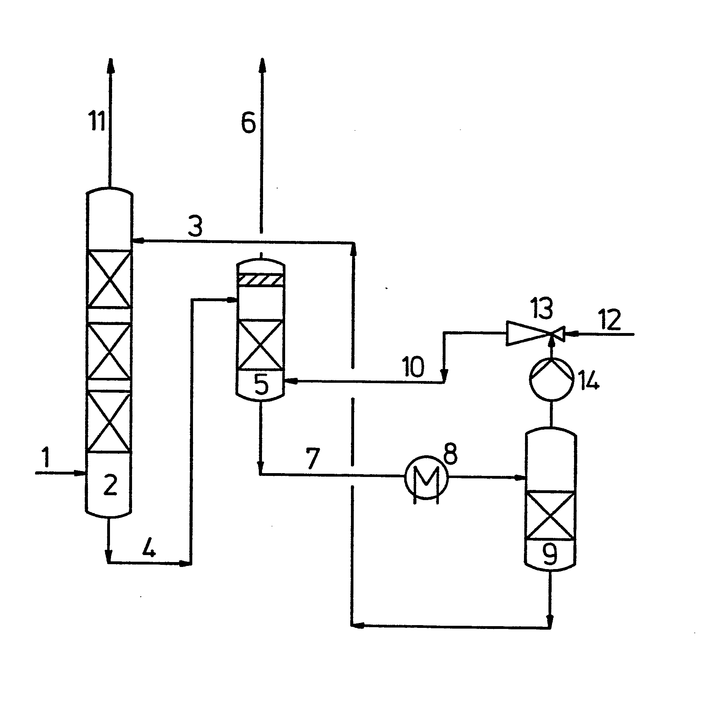

Nachfolgend werden weitere Einzelheiten der Erfindung anhand von einem Ausführungsbeispiel, dessen Verfahrensablauf in der Figur schematisch dargestellt ist, erläutert.

Gemäß der Figur wird ein $CO_2$ und/oder $H_2S$ enthaltendes Gas, z.B. ein höhere Kohlenwasserstoffe, z.B. aliphatische $C_2$-bis $C_{10}$-Kohlenwasserstoffe enthaltendes Erdgas, über Leitung 1 unter Druck in den Sumpf der Absorptionskolonne 2 gegeben. Gleichzeitig wird über Leitung 3 als Absorptionsflüssigkeit 20 bis 70 gew.-rige wäßrige Methyldiethanolaminlösung auf den Kopf der Absorptionskolonne gegeben. Die Absorptionsflüssigkeit, die im Gegenstrom zum Gas geführt wird, belädt sich mit den sauren Gasen $CO_2$ und/oder $H_2S$, und die beladene Absorptionsflüssigkeit wird über Leitung 4 am Sumpf der Absorptionskolonne abgezogen. Das gewaschene Gas wird über Leitung 11 am Kopf der Absorptionskolonne abgezogen. Der beladene Absorptionsflüssigkeitsstrom 4 wird anschließend in einen Entspannungsverdampfungsbehälter 5 entspannt, beispielsweise über ein Ventil oder vorzugsweise über eine Entspannungsturbine. Hierbei wird ein Entspannungsgas aus der Absorptionsflüssigkeit freigesetzt, das über Leitung 6 am Kopf des Entspannungsbehälters 5 abgezogen wird. Am Boden des Entspannungsbehälters 5 wird die teilentspannte Absorptionsflüssigkeit über Leitung 7 abgezogen, gegebenenfalls in Wärmetauscher 8 erwärmt, z.B. um 0 bis 15°C, und die gegebenenfalls erwärmte Absorptionsflüssigkeit wird in einen zweiten Entspannungsbehälter 9 entspannt, in dem mittels des mechanischen Vakuumerzeugungsapparates 14, z.B. eines Verdichters, und des Wasserdampfstrahlers 13 ein Druck von z.B. 0,3 bar bis weniger als Atmosphärendruck aufrecht erhalten wird. Dabei wird dem Wasserdampfstrahler 13 über Leitung 12 zweckmäßig eine solche Menge Wasserdampf zugeführt, wie sie zum Ausgleich der Wasserver-luste des Systems erforderlich ist. Das am Kopf des Entspannungsbehäl-ters 9 abgezogene Gas wird zusammen mit dem Wasserdampf, mit dem der Wasserdampfstrahler 13 betrieben wird, über Leitung 10 am Sumpf des ersten Entspannungsbehälters 5 zugeführt.

Das folgende Beispiel veranschaulicht die Erfindung.

Beispiel

Man verwendet eine Gaswaschanlage, in der sich anschließend an eine Absorptionskolonne drei hintereinandergeschaltete Entspannungsbehälter befinden. In der Absorptionskolonne werden 3,15 kmol/h eines $CO_2$-haltigen Erdgases mit einer 50 gew.-rigen wäßrigen Methyldiethanolamin-Lösung als Absorptionsflüssigkeit bei einem Druck von 75 bar gewaschen.

Das zu reinigende Gas hat folgende Zusammensetzung:

$CO_2$ 10,0 Mol.%

$CH_4$ 75,0 Mol.%

höhere Kohlenwasserstoffe

($C_2$-bis $C_{12}$-Kohlenwasserstoffe) 15,0 Mol.-%

Die Temperatur des Absorptionsmittels im Zulauf zur Absorptionskolonne beträgt 70°C. Der $CO_2$-Gehalt im gewaschenen Gas beträgt weniger als 2 Mol.-%. Das die Absorptionskolonne verlassende beladene Waschmittel wird in einem ersten Entspannungsbehälter auf einen Druck von 30 bar entspannt. Hierbei werden 0.011 Mol/h eines kohlenwasserstoffreichen Zwischenentspannungsgases mit einer $CO_2$-Konzentration von weniger als 4 Mol.-% aus der Lösung freigesetzt und am Kopf des ersten Entspannungsbehälters abgezogen. Die teilentspannte Absorptionsflüssigkeit wird anschließend in einem Wärmeaustauscher erwärmt. Die erwärmte Absorptionsflüssigkeit wird in einem zweiten Entspannungsbehälter auf 1,5 bar entspannt. Hierbei werden 0.26 kmol/h eines $CO_2$-reichen Entspannungsgases mit einer $CO_2$-Konzentration von mehr als 99 Mol.-% frei, das am Kopf des zweiten Entspannungsbehälters abgezogen wird.

Die am Boden des zweiten Entspannungsbehälters abgezogene Absorptionsflüssigkeit wird - schließlich nach Durchlaufen eines Wärmetauschers in einen dritten Entspannungsbehälter entspannt, in dem mittels eines Wasserdampfstrahlers und eines Verdichters ein Druck von 0,7 bar aufrechterhalten wird. Das am Kopf des dritten Entspannungsbehälters abgezogene Gas wird zusammen mit dem Wasserdampf, mit dem der Wasserdampfstrahler betrieben wird, in den Sumpf des zweiten Entspannungsbehälters eingeleitet. Die am Sumpf des dritten Entspannungsbehälters abgezogene Absorptionsflüssigkeit wird mit Hilfe einer Umlaufpumpe zum Kopf der Absorptionskolonne zurückgepumpt.

**Ansprüche**

1. Verfahren zum Entfernen von $CO_2$ und/oder $H_2S$ aus $CO_2$ und/oder $H_2S$ enthaltenden Gasen mittels einer wäßrigen, ein Alkanolamin enthaltenden Absorptionsflüssigkeit, dadurch gekennzeichnet, daß man die $CO_2$ und/oder $H_2S$ enthaltenden Gase in einer Absorptionsstufe bei Temperaturen von 40 bis 100°C mit einer 20 bis 70 Gew.-% Methyldiethanolamin enthaltenden wäßrigen Absorptionsflüssigkeit behandelt, am Kopf der Absorptionsstufe die behandelten Gase abzieht, am Sumpf der Absorptionsstufe die mit $CO_2$ und/oder $H_2S$ beladene wäßrige Absorptionsflüssigkeit abzieht und zur Regenerierung in mindestens zwei Entspannungsstufen entspannt und dabei die letzte Entspannungsstufe bei vermindertem Druck gegenüber Atmosphärendruck betreibt, wobei der verminderte Druck in der letzten Entspannungsstufe mittels einer mechanischen Vakuumerzeugungsapparates und eines Wasserdampfstrahlers, die hintereinandergeschaltet sind, erzeugt wird, und die regenerierte Absorptionsflüssigkeit in die Absorptionsstufe zurückführt.

2. Verfahren nach Anspruch 1, dadurch gekennzeichnet, daß der Wasserdampfstrahler hinter den mechanischen Vakuumerzeugungsapparat geschaltet ist.

3. Verfahren nach Anspruch 2, dadurch gekennzeichnet, daß das am Kopf der letzten Entspannungsstufe abgezogene Gas zusammen mit dem Wasserdampf, mit dem der Wasserdampfstrahler betrieben wird, am Sumpf der vorletzten Entspannungsstufe zugeführt wird.